# EUROPÄISCHE PATENTSCHRIFT

(11) **EP 1 274 778 B1**
(45) Veröffentlichungstag und Bekanntmachung des Hinweises auf die Patenterteilung: **16.08.2006**
(21) Anmeldenummer: 01900116.3
(22) Anmeldetag: 04.01.2001
(51) Int. Cl.: C08J 9/00, C08J 9/14, C09K 3/10, C08L 75/04

(54) **AUS DRUCKDOSEN VERSCHÄUMBARE ZUSAMMENSETZUNG ZUR ERZEUGUNG VON DÄMMSCHÄUMEN**
COMPOSITION WHICH CAN BE FOAMED FROM A PRESSURIZED CONTAINER FOR PRODUCING INSULATING FOAMS
COMPOSITION POUVANT SE TRANSFORMER EN MOUSSE EN SORTANT D'UN RECIPIENT SOUS PRESSION, DESTINEE A LA PRODUCTION DE MOUSSES D'ISOLATION

(30) Priorität: 07.01.2000 DE 10000327
(43) Veröffentlichungstag der Anmeldung: 15.01.2003
(73) Patentinhaber: RATHOR AG, 9050 Appenzell (CH)
(72) Erfinder: SOMMER, Heinrich, CH-9050 Appenzell (CH)
(74) Vertreter: Thiel, Christian
(86) Internationale Anmeldenummer: PCT/EP2001/000035
(87) Internationale Veröffentlichungsnummer: WO 2001/049779

(56) Entgegenhaltungen:
- WO-A-98/12248

## Beschreibung

Die Erfindung betrifft eine aus Druckdosen verschäumbare Zusammensetzung zur Erzeugung von stabilen Dämmschäumen auf Basis einer wässrigen Kunststoffdispersion. Die Zusammensetzung ist insbesondere zur Erzeugung von Isolierschäumen im Bauwesen geeignet.

Die erfindungsgemäße Zusammensetzung dient zur Erzeugung von Dämmschäumen, die vor allem zur Wärme- und Feuchtigkeitsdämmung durch Ausschäumen von Hohlräumen eingesetzt werden. Hauptsächliche Anwendungsgebiete sind das Bauwesen, aber auch technische Produkte, bei denen Hohlräume zur Vermeidung von Schwitzwassernestern verfüllt werden müssen. Weiterhin können diese Zusammensetzung zur Erzeugung von Dichtungen, etwa Dichtbändern verwandt werden.

Insbesondere im Bausektor werden vielfach Polyurethanschäume eingesetzt, die durch Ausbringung einer Prepolymerzusammensetzung aus Druckbehältern, beispielsweise Aerosoldosen, mit Hilfe von Treibmitteln an Ort und Stelle mit einem Raumgewicht von 10 bis 100 g/l erzeugt und verarbeitet werden. Die sogenannten 1 K-Schäume sind feuchtigkeitshärtend, d. h. sie bestehen aus einer mit der Luftfeuchtigkeit reaktionsfähigen Komponente, nämlich Isocyanatgruppen. 2 K-Schäume enthalten den Reaktionspartner in Form einer zweiten Komponente, so daß die Aushärtung zum fertigen Schaum nicht mehr oder nicht allein von der Gegenwart von Luftfeuchtigkeit abhängt. Auch hier enthält die reaktionsfähige erste Komponente Isocyanatgruppen, die mit in der zweiten Komponente vorhandenen Hydroxy- oder Amingruppen abreagieren.

Die zur Erzeugung herkömmlicher Polyurethanschäume verwandten isocyanatgruppenhaltigen Prepolymere weisen, neben ihrer besonderen Eignung zur Erzeugung stabiler Schäume, einen entscheidenden Nachteil auf, nämlich die Toxizität der isocyanathaltigen Komponenten. Dies macht besondere Vorsichtsmaßnahmen bei der Abfüllung, Verarbeitung und Entsorgung der Rückstände erforderlich. Andererseits haben aber die fertigen PUR-Schäume gute Isoliereigenschaften, sind nicht toxisch, dauerhaft und gut verarbeitbar.

Zusammensetzungen, die Polyurethanprepolymere enthalten, sind gegenüber Wasser hochreaktiv. Aus diesem Grunde können Systeme, die derartige Prepolymere enthalten, nicht auf Wasserbasis erzeugt werden. Andere flüssige Komponenten, Lösungsmittel und/oder flüssige Zusatzstoffe, sind deshalb als Träger für die schaumbildenden Komponenten unerläßlich. Bei der Auswahl der Trägerkomponenten sind durch die hohe Reaktivität der Isocyanatgruppen enge Grenzen gesetzt. Unter diesem Gesichtspunkt wäre es wünschenswert, über schaumbildende Polymere zu verfügen, die aus einer wässrigen Dispersion verschäumt werden können.

Formulierungen von filmbildenden Polymeren zusammen mit Treibgasen in einer Druckpackung zur Herstellung von Schaumpads sind aus US-A-3 912 666 bekannt. Der dortigen Formulierung wird ein nichtionischer Schaumstabilisator zugesetzt. Der Schaum wird als nicht-klebend beschrieben, was konsistent mit dem genannten Einsatzzweck für Reinigungszwecke ist.

Aus US-A-4 036 673 ist ein Verfahren zur Erzeugung eines klebenden Schaums mit Hilfe von Treibgasen aus einer wässrigen Dispersion beschrieben, der nach seiner Ausbildung kollabiert.

Es sind femer mehrere Kunststoffdispersionen auf dem Markt, die zusammen mit Treibgas in einer Druckgaspackung formuliert sind und die nach dem Ausschäumen einen kurze Zeit stabilen Schaum ergeben. Das Produkt ist als "Reifenflick" gedacht; der Schaum verteilt sich im Reifen auf der Wandung, kollabiert zu einem Film und dichtet Rißstellen ab. Eine solche Formulierung ist beispielsweise in US-A-4 501 825 beschrieben.

Der Mechanismus der Filmbildung ist in der Literatur detailliert beschrieben, siehe "Water-Born-Coatings", K. Dören et al, Hansa Publishers, München 1994. Es ist ferner bekannt, die Filmbildung durch Additive, wie Assoziativverdicker, Filmbildehilfsmittel, Füllstoffe und dergleichen zu steuern, insbesondere in Hinsicht auf die Optimierung der Eigenschaften, beispielsweise bei Produkten der Lackindustrie, siehe "Wässrige Polymerdispersionen, Syntheseeigenschaften-Anwendung", D. Distier, Wiley-VCH, 1999. Die Schaumherstellung und die Theorie der Schaumstabilisierung ist in der Literatur wie auch die Herstellung von wässrigen Schäumen eingehend dargestellt, siehe "Handbook of Aerosoltechnology", S. 358 ff, "Aqueous Aerosol Films". P.A. Sanders, Krieger Publishing, Florida 1979.

Latex-Schäume werden verschiedentlich für Druckdosenanwendungen beschrieben. Wo-A-98/12 248 beschreibt verschäumungsfähige Zusammensetzungen für die Ausbringung aus Druckdosen in Form stabiler Schäume, die aus einer wässrigen Emulsion eines filmbildenden Polymers, einem flüssigen Treibmittel und einem festen, lipophilen und nichtionischen Tensid mit einem in HLB-Wert von etwa 3 bis 8 und gegebenenfalls weiteren Zusätzen bestehen. WO-A-98/12 247 beschreibt eine verschäumungsfähige Zusammensetzung zur Ausbringung aus Druckdosen, die eine wässrige Emulsion eines filmbildenden Polymers, ein flüssiges Treibmittel, einen festen, wachsähnlichen Schaumstabilisator und ein flüssiges lipophiles Tensid enthalten.

Es hat sich gezeigt, daß die in den beiden letztgenannten Druckschriften beschriebenen verschäumbaren Zusammensetzungen zwar unmittelbar nach der Ausbringung einen stabilen Schaum ergeben, der aber im Laufe der Zeit kollabiert und den Anforderungen an einen guten Dämmschaum langfristig nicht genügt. Die ausgeprägte Tendenz zum Schrumpfen kann zwar durch die gezielte Auswahl nichtionischer Tenside als Schaumstabilisatoren gemildert, nicht aber völlig beseitigt werden. Die Gegenwart nichtionischer Tenside trägt zudem zusätzlich zur Instabilität der erzeugten Schäume bei Feuchtigkeitseinfiuß, etwa unter Bedingungen hoher Luftfeuchtigkeit, bei.

Nichtsdestoweniger besteht ein Bedarf an einem feinzelligen, elastischen, nichtschrumpfenden Schaum, der mit Hilfe einer üblichen Treibmischung aus einer wässrigen Dispersion eines filmbildenden Kunststoffes erzeugt werden kann. Insbesondere wäre es wünschenswert, einen solchen Polyurethanschaum zu haben.

Diese Aufgabe wird mit einer Zusammensetzung gelöst, die eine wässrige Dispersion wenigstens eines filmbildenden Kunststoffes mit einem Gehalt von 30 bis 80 Gew.-% an filmbildendem Kunststoff, welche eine wässrige Dispersion wenigstens eines filmbildenden Polyurethans, ein Treibgas in einer Menge von 3 bis 25 Gew.-%, bezogen auf die gesamte Zusammensetzung, und einen oder mehrere ionische Schaumstabilisatoren in einer Menge von 0,3 bis 6 Gew.-%, bezogen auf die gesamte Zusammensetzung, enthält.

Von den im Stand der Technik bekannt gewordenen Zusammensetzungen unterscheidet sich die erfindungsgemäße Zusammensetzung für die Erzeugung von Schäumen aus Druckdosen durch die Gegenwart vor allem eines anionischen Schaumstabilisators in einer Menge von 0,3 bis 6 Gew.-%. Es wird in feinzelliger, elastischer und weitgehend dimensionsstabiler Schaum erhalten, der sich auch gegenüber Feuchtigkeitseinflüssen weitgehend inert verhält.

Neben ihrer schaumstabilisierenden Wirkung haben die erfindungsgemäß eingesetzten anionischen Schaumstabilisatoren eine weitere Funktion, nämlich die Integration der Treibgase in die wässrige Phase. Modell ist die Ausbildung einer Öl-in-Wasser-Emulsion, d. h. die eingesetzten niedrigmolekularen Treibgase werden in das wässrige Medium emulgiert. Es wird angenommen, daß bei der Ausbildung von emulgierten Treibgasen in der wässrigen Phase neben den dispergierten Polymerteilchen auch emulgierte Treibgaskügelchen vorliegen.

Hauptfunktion der Stabilisatoren ist die Gewährleistung der Schaumstabilität während des Filmbildungsprozesses und während der Trocknung. Allgemein geeignet sind anionische, wasserlösliche Schaumstabilisatoren bzw. Tenside, die nach der treibgasgetriebenen Schaumbildung Langmuir-Filme an der Grenzfläche der kontinuierlichen wässrigen Phase mit der dispersen Gasphase bilden. Überraschend ist der Stabilisierungsdefekt ionischer Tenside dem nichtionischer Tenside deutlich überlegen, insbesondere was die Schaumausbeute und die Langzeitstabilisierung anbetrifft. Von den ionischen Tensiden sind die anionischen gegenüber Betaninen und kationischen bevorzugt.

Die zum Einsatz kommenden wässrigen Kunststoffdispersionen enthalten im allgemeinen 30 bis 80 Gew.-% des oder der filmbildenden Kunststoffe, vorzugsweise 35 bis 70 % und insbesondere 40 bis 60 %, bezogen auf das Gewicht der Dispersion. Im allgemeinen kommen als filmbildende Kunststoffe solche in Frage, die eine Mindestflmbildetemperatur von weniger als 100°C haben, insbesondere solche mit einer Mindestfilmbildetemperatur von weniger als 50°C. Geeignete filmbildende Kunststoffe, die zusammen mit dem Polyurethan als Latex eingesetzt werden können, sind solche auf Basis von Acrylsäure, Niederalkylacrylaten, Styrol, Vinylacetat und dergleichen. Polymere auf Ethylenbasis können ebenso eingesetzt werden, wie auch Styrol-Acryl-Copolymere, Styrol-Butadien-Copolymere oder Vinylacetat-Ethylen-Copolymere. Besonders bevorzugt ist die Verwendung von Polyurethan-Latices, allein oder in Verbindung mit den vorgenannten Latices. Bei der zum Einsatz kommenden wässrigen Kunststoffdispersionen handelt es sich um solche, wie sie kommerziell erhältlich sind. Grundsätzlich sind herkömmliche Latices, insbesondere solche für die Herstellung von Beschichtungen, für den Einsatz in erfindungsgemäßen Zusammensetzungen geeignet Eine exemplarische Liste findet sich in US-A-4 381 066.

Zur Herstellung von frostunempfindlichen Formulierungen kann die Verwendung von nichtionischen Polyurethandispersionen zweckmäßig sein. Diese Polyurethandispersionen enthalten hydrophile, in das Polymer eingebaute Polyetherketten, siehe D. Dieterich, Aqueous Emulsions, Dispersions and Solutions of Polyurethanes, Synthesis and Properties, Prog. Org. Coat. 9 (1981) 281-340. Diese Polyurethandispersionen können für sich wie auch mit Schaumstabilisatoren ionischer Natur, gegebenenfalls auch mit nichtionischen Schaumstabilisatoren zum Einsatz kommen.

Hinsichtlich der bereits erwähnten Polyurethanlatices ist anzumerken, daß diese aufgrund ihrer im Molekül vorhandenen hydrophilen und hydrophoben Bausteine außerordentlich stabile Dispersionen bilden, die praktisch ohne weitere Stabilisatoren auskommen. Dies gilt sowohl für Polyurethane auf Basis aromatischer wie aliphatischer Polyisocyanate, unabhängig davon, ob sie mit Polyetherolen oder Polyesterolen vemetzt sind. Polyurethanlatices sind, in Verbindung mit den erfindungsgemäß eingesetzten anionischen Schaumstabilisatoren femer in der Lage, Treibgase, wie verflüssigbare Kohlenwasserstoffe, Dimethylether oder verflüssigbare Fluorkohlenwasserstoffe in hinreichenden Mengen in die wässrige Dispersion zu integrieren und sehr fein zu verteilen, so daß sich ein ausgesprochen feinzelliger, elastischer und dennoch dimensionsstabiler Schaum bildet. Da sich wässrige Polyurethandispersionen weitgehend selbst stabilisieren, kann auf den Zusatz üblicher Emulgatoren in der Regel verzichtet werden.

In den erfindungsgemäßen Zusammensetzungen können Mischungen verschiedener Latices mit Vorteil eingesetzt werden. Dies gilt insbesondere auch für solche Latices, die sich hinsichtlich ihrer Mindestfilmbildetemperatur unterscheiden, da festgestellt wurde, daß man bei einer Mindestfilmbildetemperatur unterhalb der Raumtemperatur sehr feinzellige, weichelastische Schäume erhält, während bei einer Mindestfilmbildetemperatur oberhalb Raumtemperatur feinzellige Schäume erhalten werden, die nach Trocknung über Nacht eher spröde sind. Die Kombination eines Latex mit einer Filmbildetemperatur von 20°C oder weniger, insbesondere ≤ 0°C, mit einem Latex einer Mindestfilmbildetemperatur oberhalb 20°C führt zu einem weitgehenden Ausgleich der Eigenschaften, so daß ein feinzelliger, elastischer, dimensionsstabiler und gut verarbeitbarer Schaum erhalten wird. In der Regel sollten solche Mischungen die beiden Komponenten in einem Gewichtsverhältnis von 30/70 bis 70/30 enthalten.

Die erfindungsgemäßen Zusammensetzungen können Zusätze üblicher Art enthalten, beispielsweise Flammschutzmittel, Verdickungsmittel, Biocide, Fungizide, Algizide, Frostschutzmittel, Korrosionsschutzmittel, Emulgatoren, Füllstoffe, Filmbildehilfsmittel und dergleichen. Es handelt sich dabei um solche Zusätze, wie sie üblicherweise bei der Herstellung von Dämmschäumen, wässrigen Dispersionen und für die Anwendung aus Druckdosen bestimmte Zusammensetzungen üblich sind.

Als Flammschutzmittel können die üblichen, in Dämmschäumen verwandten Flammschutzmittel eingesetzt werden, sofern sie in die wässrige Dispersion einmischbar sind. Bevorzugt als Flammschutzmittel sind Dispersionen von Flammschutzmitteln auf Polymerbasis, wie beispielsweise PVC-Dispersionen, Polyvinylidenchlorid-Dispersionen oder auch Polychloropren-Latices, wie sie auf dem Markt erhältlich sind.

Als Hilfmittel zum Verdicken der Latices können Verdicker vewandt werden, wie sie beispielsweise für wässrige Lacke eingesetzt werden. Eine Verdickung kann insbesondere dann notwendig werden, wenn Feststoffe, wie halogenfreie übliche Flammschutzmittel (Ammoniumpolyphosphate, Aluminiumhydroxid, Borsalze) oder auch andere funktionelle Zusätze, wie Fungizide, Insektizide, Algizide und dergleichen, eingesetzt werden sollen. Geeignete Verdickungsmitel sind beispielsweise Cellulosederivate, wie Methocel^{R} 228, Methocel^{R} A, Methocel^{R} 311 (Firma DOW Chemical), Acrylat-Verdicker für wässrige Systeme, etwa A P1/1 (Münzing-Chemie) und Mirox AM (Stockhausen), Polyurethan-Verdicker für wässrige Systeme, beispielsweise Tafigel^{R} PUR 40, Tafigel^{R} PUR 55 (Münzing Chemie), sowie anorganische Verdicker, wie Bentonite, Hectorit, Montmorillonit, Kieselsäuren (Aerosil^{R} 200, Firma Degussa).

Besonders die Verdickungsmittel auf Basis kurzkettiger Polyurethane, etwa die Tafigel-Typen, begünstigen die Ausbildung von standfesten Schäumen und sind der Ausbildung einer homogenen Zellstruktur bei Einsatz von niedrigviskosen Rohstoffen förderlich. Eine gute Standfestigkeit ist insbesondere beim Ausschäumen von senkrechten Fugen erwünscht.

Die Kombination von Dispersionen filmbildender Polymere auf Nicht-Polyurethanbasis mit Verdickungsmitteln auf Polyurethanbasis ergibt Zusammensetzungen, die qualitativ den Polyurethandispersionen für die Schaumbildung nahekommen. Aufgrund der Ausbildung stabiler Strukturen in wässrigen Systemen kann bei Verwendung von Polyurethanverdickern auch auf den Zusatz üblicher Emulgatoren ganz oder teilweise verzichtet werden.

Für spezielle Anwendungen können den Schäumen übliche Biozide zugesetzt werden, beispielsweise um Insektenfraß, Algenwuchs oder Pilzbefall abzuwehren oder vorzubeugen.

Da damit gerechnet werden muß, daß die erfindungsgemäßen Zusammensetzungen vor der Anwendung längere Zeit unter ungünstigen Bedingungen gelagert werden müssen, kann es sinnvoll sein, übliche Frostschutzmittel und Korrosionsschutzmittel zuzusetzen. Beispielsweise genannt seien Ethylenglykol, Propylenglykol und Diethylenglykol. Geeignete Korrosionsschutzmittel sind Alkanolamine.

Weitere Aditive sind filmbildende Hilfsmittel, mit denen die Mindestfilmbildetemperatur herabgesetzt werden kann und die auf Basis der hydrophobie bzw. hydrophilie der eingesetzten filmbildenden Polymere nach Diestler ausgewählt werden können, beispielsweise Texanol^{R}, Propylenglykol, Dowanol^{R}DPM.

Da es sich bei den Kunstoffdispersionen um wässrige Systeme mit einem hohen Wassergehalt handelt, kann es erforderlich sein, daß Hilfsmittel zugesetzt werden, die die Löslichkeit bzw. Dispergierbarkeit der Additive und Treibgase und die Bildung einer homogenen und stabilen Phase gewährleisten. Modell ist die Ausbildung einer Öl-in-Wasser-Emulsion, d. h. die eingesetzten niedrigmolekularen Treibmittel und die Additive werden in das wässrige Medium emulgiert.

Bei der Verwendung von Polyurethandispersionen kann auf die Verwendung von Emulgatoren weitgehend verzichtet werden. Ansonsten können solche Emulgatoren eingesetzt werden, wie sie bei der Herstellung von Kunststoffdispersionen in der Emulsionspolymersation, bei pharmazeutischen Anwendungen zur Herstellung von Gelen und Cremes und für die Solubilisierung von Farbstoffen verwandt werden. Insbesondere geeignet sind Emulgatoren aus der Reihe der Tenside. Beispiele sind ethoxylierte Fettalkohole, ethoxylierte Alkylphenole, ethoxylierte Fettsäuren, Alkylsulfate, Alkylethersulfate, Cocobetaine, Alkylamidopropylsulfobetaine, Alkyldimethylbenzylammoniumbromide, Sorbitanester, wie Sorbitanmonopalmitat, -monosterarat und -monooleat, ethoxyliertes Ricinusöl, ethoxyliertes hydriertes Ricinusöl und dergleichen. Weitere nichtionische Emulgatoren und Schutzkolloide, die auch in Kombination mit ionischen Emulgatoren eingesetzt werden können, sind beispielsweise Polyvinylalkohole, Polyvinylpyrrolidon sowie amphiphile Blockcopolymere aus Ethylenoxid und Propylenoxid, beispielsweise Pluronics^{R} von BASF oder Synperonics^{R} von ICI Surfactants.

Bei den anionischen Schaumstabilatoren handelt es sich in der Regel um Seifen und Tenside. Sie sind in einer Menge von 0,3 bis 6 Gew.-%, bezogen auf die gesamte Zusammensetzung, zugegen, vorzugsweise in einer Menge von 0,5 bis 4 % und insbesondere mit etwa 1 bis 3 %. In Frage kommen vorzugsweise Seifen, etwa Ammonium-, Natrium- und Kaliumseifen, insbesondere Ammonium- oder Natriumsterat, -laurat, -myristat und -palmitat.

Weiterhin geeignet sind Derivate von Fettsäuren der allgemeinen. Formel RCO-N(CH₃)CH₂COONa, wobei RCO für einen Laurin-, Myristin-, Palmitin-, Stearin- oder Ölsäurerest steht. Diese Fettsäurederivate sind allgemein als Sarcosinate bekannt.

Ferner können Fettalkylethercarboxylate der allgemeinen Formel R-(OCH₂CH₂)ₙ-OCH₂COONa verwandt werden, worin R für einen Fettalkylrest steht. Geeignet sind α-Sulfofettsäuremethylester, Fettalkylsulfate, Fettalkylethersulfate, Alkylphosphate und Alkyletherphosphate, Alkylbenzolsulfonate, Olefinsulfonate. Alkansulfonate sowie Sulfobemsteinsäureester oder Sulfobemsteinsäureester von Fettsäurealkanolamiden.

Bei den α-Sulfofettsäureestem sind solche der Formel RCH(SO₃H)(COOCH₃), worin R für einen Fettalkylrest steht, bzw. deren Salze bevorzugt. Bei einem Fettalkylsulfaten ist insbesondere Stokal^{R} SAF bevorzugt, ein Ethersulfat aus C₁₂-C₁₅ Fettalkoholethoxylaten mit 2 bis 3 Ethylenoxideinheiten, etwa der Formel C₁₂H₂₅(OCH₂CH₂)₂₋₃OSO₃H, Natriumsalz.

Bei den Alkylphosphaten und Alkyletherphosphaten handelt es sich um handelsübliche, ebenso bei den Alkylbenzolsulfonaten, von denen Dodecylbenzolsulfonat bevorzugt ist. Bei den Olefinsulfonaten sind die C₁₄- und C₁₆₋Homologen bevorzugt, bei den Alkansulfonaten die mit 13 bis 18 Kohlenstoffatomen. Insbesondere gilt, daß bei den Fettsäurederivaten insbesondere solche mit 10 bis 20 Kohlenstoffatomen in Frage kommen.

Besonders bevorzugte anionische Schaumstabilisatoren sind Seifen und Fettalkoholsulfate (beispielsweise Produkte der Firma Stockhausen, Krefeld, Deutschland) die unter Bezeichnug Stokal^{R}STA und Sultafon^{R}SAF vertrieben werden. Mit einer Kombination aus Ammoniumstearat und Fettalkoholsuffat kann eine Feinregulierung der Schaumstruktur erfolgen.

Als kationische Schaumstabilisatoren kommen beispielsweise übliche Benzalkoniumsalze, Alkyltrimethylammoniumsalze sowie Fettalkoniumsalze in Frage. Als Salze sind insbesondere die Chloride und Metosulfate bevorzugt. Beispiele sind ein Alkyldimethylbenzylammoniumchlorid mit dem Handelsnamen Empigen BAC 50, Alkyltrimethylammoniummetosulfat mit dem Handelsnamen Empigen CM (beide von Albright and Wilson), ein C12-C14 Alkylbenzyldimethylammoniumchlorid der Handelsbezeichnung Servamine KAC 422 D (Firma Condea) sowie ein Steaalkoniumchlorid der Handelsbezeichnung Ninox 4002 (Firma Stepan).

Bevorzugte kationische Schaumstabilisatoren sind weiterhin lepophil modifizierte quartemisierte Proteine, wie sie beispielsweise unter der Bezeichnung Macropro von der Firma The McIntyre Group angeboten werden. Es handelt sich dabei um hydrolisierte Proteineinheiten, die beispielsweise von hydrolisiertern Kolagen, Keratin, Weizenprotein, Sojaprotein oder hydrolisierter Seide oder Milch abgeleitet sind und mit einem natürlichen Lipidrest über eine quartemäre Ammoniumgruppe modifiziert sind.

Ebenfalls geeignet sind Betaine, d. h. Tenside amphoteren Charakters (Zwitterionen). Hier kommen in Frage Fettsäure, Ammidoalkylbetaine, beispielsweise Kokosfettsäureammidopropylbetain und Kokosfettsäureammidopropylsulfobetain, wie auch Fettsäureamphoacetate, beispielsweise Lauroamphoacetat. Handelsmarken wären Ampholit JB 130 K von Kondea, Ammonyl 675 SB von Sepik und Empigen CDL 60/P von Albright and Wilson.

Die in der erfindungsgemäßen Zusammensetzung verwandten Treibgase sind solche, wie sie üblicherweise zur Erzeugung von Druckdosenschäumen verwandt werden. In Frage kommen inbesondere verflüssigbare Treibgase, wie Propan, n-Butan, Isobutan, Dimethylether, 1,1,1,2-Tetrafluormethan (R134a) und 1,2-Difluormethan (R152a), allein oder in Abmischung. Besonders bevorzugt ist eine Mischung aus Propan, Isobutan und Dimethylether. Zur Ergänzung und Unterstützung können weitere Treibgase, wie CO₂ oder N₂O, zugemischt werden. Der Treibgasgehalt in der gesamten Zusammensetzung beträgt 3 bis 25 Gew.-%, vorzugsweise bis 20 Gew.-% und insbesondere bis 12 Gew.-%. Für die Erzeugung von Dichtschäumen und -strängen ist im allgemeinen ein Treibgasgehalt von 3 bis 5 Gew.-% voll ausreichend. Für die Erzeugung von Dichtschäumen ist die überwiegende oder alleinige Verwendung von CO₂ als Treibgas ausreichend und bevorzugt.

Die Latextypen werden anhand ihrer Filmbildetemperatur ausgewählt. Maßgeblich ist eine Filmbildetemperatur von weniger als 100°C. Die Mindestfilmbildetemperatur kann aber durch Verwendung geeigneter Filmbildehilfsmittel in den gewünschten Bereich herabgesetzt werden.

Besonders bevorzugt ist die Verwendung von Polyurethandispersionen sowie Dispersionen von Polyurethan und einem weiteren Filmbildner, etwa Polyurethan-Acrylat-Kombinationen. Für bestimmte Anwendungen kann die Verwendung von hydrophoben Filmbildnern zweckmäßig sein, beispielsweise solchen auf olefinischer Basis oder mit hohen olifinischem Anteil, etwa Styrol-Butadien-Copolymerisaten und Styrol-Acrylat-Copolymerisaten. Es wurde festgestellt, daß bei Einsatz hoher Anteile an hydrophilen Kunststoffen, z. B. hohen Anteilen von Vinylacetat-Ethylen-Propolymer, ein erhebliches Wasseraufnahmepotential besteht, was dazu führt, daß bei hohen relativen Luftfeuchtigkeiten sich der gebildete Schaum mit Wasser vollsaugt und dadurch angelöst und aufgeweicht wird. Dies kann zum inneren Kollaps des metastabilen Schaums und zum Verlust der erwünschten Wärme- und Schalldämmleistung führen.

Eine Übersicht über die einsetzbaren Latices ergibt sich aus Tabelle 1. Zu den Polyurethandispersionen sei angemerkt, daß für die Erstellung UV-stabiler Schäume der Einsatz von Polyurethan auf Basis aliphatischer Polyisocyanate bevorzugt ist.

Die Erfindung betrifft femer mit der vorstehend beschriebenen Zusammensetzung gefüllte Druckdosen zum Ausbringen von Dämmschäumen. Es handelt sich dabei um übliche Aerosol- oder Druckdosen, wie sie weltweit für verschiedene Zwecke zum Einsatz kommen, darunter auch zur Erzeugung von 1 K-Polyurethan-Dämmschäumen auf Basis von Isocyanat-Prepolymeren. Um die Ausbringbarkeit von in solchen Druckdosen länger gelagerten Zusammensetzungen zu verbessern, kann es sinnvoll sein, in die gefüllte Druckdose eine Ausbringhilfe in Form eines Metallstabes oder einer Stahlkugel einzubringen, die das Aufrühren bzw. Aufschütteln einer abgesetzten Dispersion erleichtem.

**Tabelle 1**

| **Latex** | **Feststoff %** | **MFBT °C** | **pH** | **Viskosität mPas** | **Hersteller** | **Bemerkung** |
|---|---|---|---|---|---|---|
| **Styrol-Butadien-Copolymerisate** | | | | | | |
| Lipaton SB 4520 | 50 | 0 | 8,5 | 200 | Polymer-Latex, Marl | |
| Lipaton SB 5521 | 50 | 0 | 8,5 | 100 | Polymer-Latex, Marl | |
| Lipaton SB 5811 | 47 | 3 | 8 | 25 | Polymer-Latex, Marl | |
| Lipaton SB 5850 | 46 | 3 | 8 | 20 | Polymer-Latex, Marl | |
| DL 955 | 50 | 18 | 7 | 200 | DOW | |
| DL 980 | 50 | 0 | 5 | 250 | DOW | |
| | | | | | | |

| **Styrol-Acrylat-Copolymerisat** | | | | | | |
|---|---|---|---|---|---|---|
| Lipaton X 3820 | 50 | 4 | 7,5 | 160 | Polymer-Latex, Marl | |
| Lucidene 375 | 45 | 85 | 8,5 | 350 | Morton International, Bremen | |
| | | | | | | |

| **Vinylacetat-Ethylen-Copolymer** | | | | | | |
|---|---|---|---|---|---|---|
| Vinnapas LL 7200 (Airflex 720) | 72 | | | 2300 | Air Products, Burghausen | |
| | | | | | | |

| **Polyurethandispersion** | | | | | | |
|---|---|---|---|---|---|---|
| U 500 | 40 | 0 | 7,4 | 400 | Alberdingk Boley, Krefeld | PUR/Polyether |
| U 600 A | 40 | 0 | 8 | 300 | Alberdingk Boley, Krefeld | |
| U 210 | 61 | 0 | 8 | 1000 | Alberdingk Boley, Krefeld | PUR/Polyether |
| U 300 | 40 | 0 | - | - | Alberdingk Boley, Krefeld | PUR/Polyether |
| U 650 | 40 | 0 | - | - | Alberdingk Boley, Krefeld | PUR/Polyether |
| Impranil DLNW 50 | 50 | - | - | - | Bayer AG | PUR/Polyether |

| **Acrylat-Dispersion** | | | | | | |
|---|---|---|---|---|---|---|
| AC 548 | 50 | 13 | 8 | 4500 | Alberdingk Boley, Krefeld | |
| AC 2535 | 50 | 20 | 7,5 | 3000 | Alberdingk Boley, Krefeld | |
| AC 31 | 50 | 40 | 7,5 | 1000 | Alberdingk Boley, Krefeld | |
| AC 2529 | 43 | 50 | 7 | 4500 | Alberdingk Boley, Krefeld | |
| AC 2509 | 50 | 80 | 7,5 | 500 | Alberdingk Boley, Krefeld | |
| | | | | | | |

| **Acryl-Methacrylsäurester-Dispersion** | | | | | | |
|---|---|---|---|---|---|---|
| AC 548 | 50 | 13 | 8 | 4500 | Alberdingk Boley, Krefeld | |

| | | | | | | |
|---|---|---|---|---|---|---|
| * MFBT = Mindestfilmbildetemperatur | | | | | | |

Die erfindungsgemäßen Zusammensetzungen werden wie folgt formuliert. Die Latexmischung wird vorgelegt unter kräftigem Rühren mit den Schaumstabilisatoren und gegebenenfalls mit Emulgatoren versetzt. Bei Verwendung wasserunlöslicher Komponenten müssen diese in organischen Lösungsmitteln vorgelöst und dann langsam in den Latex eingetragen werden. Daß dabei höhere Konzentrationen eingearbeitet werden können, als dies die Löslichkeit in Wasser erwarten läßt, ist vermutlich auf die Fähigkeit zur Mizellenbildung bzw. auf den Einbau der Tenside in die lamellaren Schichten der dispergierten Polymerteilchen an der Grenzfläche Polymer-Wasser zurückzuführen.

Als geeignete organische Lösemittel für die erfindungsgemäßen wässrigen Dispersionen haben sich niedrigmolekulare Alkohole, wie Ethanol, Propanol, Isopropylalkohol, Butanol, Isobutanol, tert-Butanol, Ethylenglykol, Isobutylglykol, Diethylenglykol, 1-Methoxy-2-propanol, 1-Ethoxy-2-propanol und dergleichen herausgestellt.

Sind Lösungen erforderlich, werden diese in der Wärme hergestellt. Manche Systeme, wie zum Beispiel Hexadekansäure 40 %ig in Isopropanol sind nach dem Abkühlen nur wenige Stunden verarbeitbar, da ein ausgeprägter Mizellenaufbau und die Ausbildung flüssigkristalliner Strukturen auftritt Durch Erwärmen und Unterrühren können diese Strukturen wieder abgebaut werden.

Es versteht sich, daß die anionischen Tenside auch durch Neutralisation der zugehörigen Säuren in einer Basis eingestellten wässrigen Dispersion oder in einer wässrigen Dispersion eines Filmbildners mit basischen Funktionen erzeugt werden können.

Nach Zusatz der Tenside und gegebenenfalls Emulgatoren werden weitere Additive zugesetzt und nach Einfüllen und Verschließen der Druckdose mit dem Treibgas beaufschlagt.

Der Erfindung wird durch die nachfolgenden Beispiele erläutert.

### Beispiele 1 bis 7

Druckdosen wurden mit erfindungsgemäßen Zusammensetzungen gemäß Tabelle 2 gefüllt, verschlossen und nach einigen Tagen Äquilibrierung getestet.

Alle Zusammensetzungen ergaben Schäume mit einem Raumgewicht von etwa 100 g/cm³. Die besten Ergebnisse wurden mit Zusammensetzungen erhalten, die auf Dispersionen von Polyurethanen oder Abmischungen mit Polyurethanen beruhten. In dem Fall ergaben sich dimensionsstabile, feinzellige, elastische Schäume mit guter bis sehr guter Klebkraft.

Beispiel 5 zeigt, daß die Verwendung eines nichtionischen Schaumstabilisators (Brij 52) der Schaum der nötigen Dauerhaftigkeit entbehrt. Der Schaum war nach 24 Stunden kollabiert, die Zusammensetzung zur Ausschäumung von Fugen nicht geeignet.

In der Regel wurden auch mit Dispersionen, die kein Polyurethan enthielten, schlechtere Ergebnisse erzielt, sei es, daß der Schaum schrumpfte (Beispiel 3) oder daß er sich als spröde oder bröselig erwies (Beispiel 4). Die Tendenz zur Bröseligkeit konnte aber durch Zumischen von Polyurethandispersion (Beispiel 7) ausgeglichen werden.

Alle Schäume zeigten ein gutes Haftvermögen an Holz und anderen Materialien. Dies ist insbesondere für den Einsatz im Baugewerbe wichtig, wo Dämmschäume zum Einschäumen von Tür- und Fensterzargen regelmäßig eingesetzt werden.

Bei Einstellung mit einem Trebgasgehalt von 3 bis 5 Gew.% können die erfindungsgemäßen Zusammensetzungen zu Dichtsträngen verschäumt werden, wie sie beispielsweise in Gebäudefugen, aber auch in Kühlschränken zum Einsatz kommen.

Bei den Beispielen 3,4 und 5 handelt es sich um Vergleichsbeispele.

**Tabelle 2**

| **Substanz** | **1** | **2** | **3** | **4** | **5** | **6** | **7** |
|---|---|---|---|---|---|---|---|
| U 210 | 82 | | | | 88 | 85 | |
| U 500 | | 82 | | | | | |
| U 600 A | | | | | | | 42 |
| AC 2529 | | | | 82 | | | 40 |
| DL 955 | | | 82 | | | | 2,5 |
| Stokal STA Sultafon SAF | | | | | | | |
| | 9 | 9 | 9 | 9 | | 9 | 2,5 |
| Brij 52 Lösung | | | | | 3 | | |
| ethox. Nonylphenol | | | | | | | 3 |
| Propan | 2 | 2 | 2 | 2 | 2 | | 4 |
| Iso-Butan | 3 | 3 | 3 | 3 | 3 | 3 | 2 |
| Dimethylether | 4 | 4 | 4 | 4 | 4 | 3 | 4 |
| Summe | 100 | 100 | 100 | 100 | 100 | 100 | 100 |
| Zellbild in 1 cm Fuge | feinzellig | feinzellig | feinzellig, starker Schrumpf | feinzellig | kollabiert | kompakt feinzellig | elastisch |
| Elastizität | hoch- elastisch | hoch- elastisch | weich, nicht elastisch | spröde-bröselig | hoch-elastisch | hoch-elastisch | |
| Klebkraft | sehr gut | sehr gut | gut | gut | sehr gut | sehr gut | |

U 600 A = Polyurethandispersion von Alberdingk Boley
U 210 = Polyurethandispersion von Alberdingk Boley
U 500 = Polyurethandispersion von Alberdingk Boley
Stokal STA (Stockhausen) = 30 %ig Ammoniumstearat in Wasser
Brij 52 (FLUKA) = Cetylalkohol, ethoxyliert ca. 2 EO-Einheiten, 50 %ig in Isopropanol
DL 955 = Styrol-Butadien Dispersion von DOW Chemical
Sultafon SAF (Stockhausen) = 30 %ig Fettalkoholsulfat in Wasser
AC 2529 = Polyacrylatdispersion von Alberdingk Boley

## Patentansprüche

1. Aus Druckdosen verschäumbare Zusammensetzung auf Basis einer wässrigen Kunststoffdispersion. mit einem Gehalt von 30 bis 80 Gew.% an filmbildendem Kunststoff, welche eine wässrige Dispersion wenigstens eines filmbildenden Polyurethans, ein Treibgas in einer Menge von 3 bis 25 Gew.-%, bezogen auf die gesamte Zusammensetzung, und einen oder mehrere ionische Schaumstabilisatoren in einer Menge von 0.3 bis 6 Gew.-%, bezogen auf die gesamte Zusammensetzung, enthält.

2. Zusammensetzung nach Anspruch 1, **dadurch gekennzeichnet, daß** die wässrige Kunststoffdispersion 40 bis 60 Gew.-% an filmbildendem Kunststoff enthält.

3. Zusammensetzung nach Anspruch 1 oder 2, **dadurch gekennzeichnet, daß** die Mindestfilmbildetemperatur weniger als 100°C beträgt.

4. Zusammensetzung nach einem der vorstehenden Ansprüche, **dadurch gekennzeichnet, daß** die Mindestfilmbildetemperatur weniger als 50°C beträgt.

5. Zusammensetzung nach einem der vorstehenden Ansprüche, **dadurch gekennzeichnet, daß** die wässrige Dispersion werkstem ein Polyacrylat, ein Styrol-Butadien-Copolymer, ein Vinylacetat-Ethylen-Copolymer, ein Acryl-Methacrylsäure-Copolymer oder eine Mischung derselben enthält.

6. Zusammensetzung nach Anspruch 5, **dadurch gekennzeichnet, daß** die wässrige Dispersion eine Mischung aus einem Polyurethan und einem weiteren Kunststoff enthält.

7. Zusammensetzung nach Anspruch 5 oder 6, **dadurch gekennzeichnet, daß** in der Dispersion zwei filmbildende Kunststoffe in einem Mischungsverhältnis von 30/70 bis 70/30 nach Gewicht vorliegen, von denen der eine Mindestfilmbildetemperatur von 20°C oder weniger und der andere eine Mindestfilmbildetemperatur von mehr als 20°C aufweist.

8. Zusammensetzung nach einem der vorstehenden Ansprüche, **gekennzeichnet durch** übliche Zusätze in Form von Flammschutzmitteln, Verdickungsmitteln, Bioziden, Fungiziden, Algiziden, Frostschutzmitteln, Füllstoffen, Korrosionsschutzmitteln und/oder Emulgatoren in einer Gesamtmenge von bis zu 50 Gew.-%, bezogen auf die gesamte Zusammensetzung.

9. Zusammensetzung nach einem der vorstehenden Ansprüche, **dadurch gekennzeichnet, daß** der oder die Schaumstabilisatoren anionischer, kationischer oder amphoterer Natur sind.

10. Zusammensetzung nach Anspruch 9, **dadurch gekennzeichnet, daß** der oder die Schaumstabilisatoren ausgewählt sind aus Carboxylaten, Derivaten von Fettsäuren, Fettalkylethercarboxylaten, Alpha-Sulfofettsäuremethylestem, Fettalkylsulfaten, Fettalkylethersulfaten, Alkylphosphaten, Alkyletherphosphaten, Alkylbenzolsulfonaten, Alkansulfonaten, Olefinsulfonaten, Sulfobemsteinsäureestern und/oder Sulfobemsteinsäureestem von Fettsäurealkanolamiden.

11. Zusammensetzung nach Anspruch 9, **dadurch gekennzeichnet, daß** der oder die Schaumstabilisatoren ausgewählt sind aus lipophilen, modifizierten, quarternisierten Proteinen, Benzalkoniumsalzen, Trimethylalkylammoniumsalzen und/oder Fettalkoniumsalzen.

12. Zusammensetzung nach Anspruch 9, **dadurch gekennzeichnet, daß** der oder die Schaumstabilisatoren Betaine sind.

13. Zusammensetzung nach einem der vorstehenden Ansprüche, **dadurch gekennzeichnet, daß** die Schaumstabilisatoren in einer Menge von 1,0 bis 4,0 Gew.-%, bezogen auf die gesamte Zusammensetzung, zugegen sind.

14. Zusammensetzung nach einem der vorstehenden Ansprüche, **dadurch gekennzeichnet, daß** das Treibgas eine Mischung verflüssigbarer Treibgase ist.

15. Zusammensetzung nach Anspruch 11, **dadurch gekennzeichnet, daß** die verflüssigbare Treibgase, Propan, Butan, Isobutan und/oder Dimethylether sind.

16. Zusammensetzung nach einem der vorstehenden Ansprüche, **dadurch gekennzeichnet, daß** sie als Treibgas CO₂ und/oder N₂O enthält.

17. Verwendung der Zusammensetzung nach einem der vorstehenden Ansprüche zur Erzeugung von Dicht-, Dämm- und Isolierstoffen, insbesondere für die Wärmeisolierung.

18. Verwendung nach Anspruch 17 zur Erzeugung von Dichtbändem.

19. Druckdose, enthaltend eine Mischung nach einem der Ansprüche 1 bis 16.

20. Druckdose nach Anspruch 19, **dadurch gekennzeichnet, daß** sie zusätzlich eine Stahlkugel enthält.

## Claims

1. A composition on the basis of an aqueous plastic dispersion comprising 30 % to 80 % by weight of a film-forming plastic material that can be foamed from pressurized containers and contains an aqueous dispersion of at least one film-forming plastic polyurethane, a propellant gas amounting to between 3 % and 25 % by weight in relation to the entire composition and one or more ionic foam stabilizers amounting to between 0.3 and 6 % by weight in relation to the entire composition.

2. The composition according to claim 1, **characterized in that** the aqueous plastic dispersion contains 40 to 60 % by weight of film-forming plastic material.

3. The composition according to claims 1 or 2, **characterized in that** the minimum film-forming temperature is below 100°C.

4. The composition according to one of the above claims, **characterized in that** the minimum film-forming temperature is below 50°C.

5. The composition according to one of the above claims, **characterized in that** the aqueous dispersion further contains a polyacrylate, a styrene butadiene copolymer, a vinyl acetate ethylene copolymer, an acrylic-methacrylic acid copolymer or a mixture of same.

6. The composition according to claim 5, **characterized in that** the aqueous dispersion contains a mixture of a polyurethane and another plastic material.

7. The composition according to claims 5 or 6, **characterized in that** two film-forming plastic materials are provided in the mixture at a mixing ratio of between 30/70 and 70/30 by weight, of which one has a minimum film-forming temperature of 20°C or less and the other has a minimum film-forming temperature of more than 20°C.

8. The composition according to one of the above claims, **characterized by** customary additives in the form of flame retarding agents, thickeners, biocides, fungicides, algicides, antifreezing agents, fillers, anticorrosion agents and/or emulsifiers of a total amount of up to 50 % by weight in relation to the entire composition.

9. The composition according to one of the above claims, **characterized in that** the foam stabilizer(s) are of anionic, cationic or amphoteric nature.

10. The composition according to claim 9, **characterized in that** the foam stabilizer(s) are selected from carboxylates, derivates of fatty acids, fatty alkyl ether carboxylates, alpha-sulfo fatty acid methly ester, fatty alkyl sulfates, fatty alkyl ether sutfates, alkyl phosphates, alkyl ether phosphates, alkyl benzene sulfonates, alkane sulfonates, olefine sulfonates, sulfo succinate and/or sulfo succinate of fatty acid alkanolamides.

11. The composition according to claim 9, **characterized in that** the foam stabilizer(s) are selected from lipophilic, modified, quarternary proteins, benzalkonium salts, trimethyl alkyl ammonium salts and/or fatty alkonium salts.

12. The composition according to claim 9, **characterized in that** the foam stabilizer(s) are betaines.

13. The composition according to one of the above claims, **characterized in that** the foam stabilizers are present in an amount of between 1.0 and 4.0 % by weight in relation to the entire composition.

14. The composition according to one of the above claims, **characterized in that** the propellant gas is a mixture of liquefiable propellant gases.

15. The composition according to claim 11, **characterized in that** the liquefiable propellant gases are propane, butane, isobutane and/or dimethyl ether.

16. The composition according to one of the above claims, **characterized in that** said composition contains CO₂ and/or N₂O as propellant gas.

17. Use of the composition according to one of the above claims for the production of sealing and insulating substances, in particular for thermal insulation purposes.

18. Use according to claim 17 for the production of insulating strips.

19. A pressurized container containing a mixture according to one of the claims 1 to 16.

20. The pressurized container according to claim 19, **characterized in that** it additionally contains a steel ball.

## Revendications

1. Composition, pouvant se transformer en mousse en sortant de récipients sous pression, à base d'une dispersion de matière plastique aqueuse présentant une teneur de 30 à 80 % en poids de plastique filmogène contenant une dispersion aqueuse d'au moins un polyuréthane filmogène, un gaz propulseur en une quantité allant de 3 à 25 % en poids rapportée à la composition totale et un ou plusieurs agents de stabilisation de mousse ioniques en une quantité allant de 0,3 à 6 % en poids rapportée à la composition totale.

2. Composition selon la revendication 1, **caractérisée en ce que** la dispersion de matière plastique aqueuse contient 40 à 60 % en poids d'une matière plastique filmogène.

3. Composition selon la revendication 1 ou 2, **caractérisée en ce que** la température de formation du film minimale s'élève à moins de 100°C.

4. Composition selon l'une des revendications précédentes, **caractérisée en ce que** la température de formation du film minimale est inférieure à 50°C.

5. Composition selon l'une quelconque des revendications précédentes, **caractérisée en ce que** la dispersion aqueuse comprend par ailleurs un polyacrylate, un copolymère styrène butadiène, un copolymère éthylène acétate de vinyle, un copolymère acide méthacrylique-acryle ou un mélange de ceux-ci.

6. Composition selon la revendication 5, **caractérisée en ce que** la dispersion aqueuse comprend un mélange d'un polyuréthane et d'une autre matière plastique.

7. Composition selon la revendication 5 ou 6, **caractérisée en ce que**, dans la dispersion, deux matières plastiques filmogènes sont présentes en un rapport de mélange de 30/70 à 70/30 rapporté au poids, parmi lesquelles l'une présente une température de formation du film minimale de 20°C ou moins et l'autre présente une température de formation du film minimale supérieure à 20°C.

8. Composition selon l'une quelconque des revendications précédentes, **caractérisée par** des ajouts traditionnels sous forme de produits retardateurs de flammes, d'agents épaississants, de biocides, de fongicides, d'algicides, de produits anti-gel, de charges, d'agents anticorrosion et/ou d'émulsifiants en une quantité globale pouvant atteindre 50 % en poids rapportée à la composition totale.

9. Composition selon l'une quelconque des revendications précédentes, **caractérisée en ce que** le ou les agents de stabilisation de la mousse sont de nature anionique, cationique ou amphotère.

10. Composition selon la revendication 9, **caractérisée en ce que** le ou les agents de stabilisation de la mousse sont sélectionnés parmi des carboxylates, des dérivés de matières grasses, des carboxylates d'éther d'alkyle gras, des esters méthyliques d'acide gras alpha sulfo, des sulfates d'alkyle gras, des sulfates d'éther d'alkyle gras, des phosphates d'alkyle, des phosphates d'éther alkyliques, des sulfonates de benzène alkylique, des sulfonates d'alcane, des sulfonates d'oléfine, des esters d'acide sulfosuccinique et/ou des esters d'acide sulfosuccinique d'amides alcanoïques d'acide gras.

11. Composition selon la revendication 9, **caractérisée en ce que** le ou les agents de stabilisation de la mousse sont sélectionnés parmi les protéines lipophiles, quaternisées ou modifiées, des sels de benzalconium, des sels de triméthylalkylammonium et/ou des sels d'alconium gras.

12. Composition selon la revendication 9, **caractérisée en que** le ou les agents de stabilisation de la mousse sont des bétaïnes.

13. Composition selon l'une quelconque des revendications précédentes, **caractérisée en ce que** les agents de stabilisation de la mousse sont présents en une quantité allant de 1,0 à 4,0 % en poids rapportée à la composition totale.

14. Composition selon l'une quelconque des revendications précédentes, **caractérisée en ce que** le gaz propulseur est un mélange de gaz propulseurs condensables.

15. Composition selon la revendication 11, **caractérisée en ce que** les gaz propulseurs condensables sont le propane, le butane, l'isobutane et/ou l'éther diméthylique.

16. Composition selon l'une quelconque des revendications précédentes, **caractérisée en ce qu'**elle contient en tant que gaz propulseur du CO₂ et/ou du N₂O.

17. Utilisation de la composition selon l'une quelconque des revendications précédentes en vue de la fabrication de matières imperméables, de produits insonorisants et de matériaux isolants, destinés notamment à l'isolation thermique.

18. Utilisation selon la revendication 17 en vue de la fabrication de bandes imperméables.

19. Récipient sous pression contenant un mélange selon l'une quelconque des revendications 1 à 16.

20. Récipient sous pression selon la revendication 19, **caractérisé en ce qu'**il contient en plus une bille en acier.
